# EUROPEAN PATENT SPECIFICATION

(11) **EP 1 088 972 B1**
(45) Date of publication and mention of the grant of the patent: **19.04.2006**
(21) Application number: 00119907.4
(22) Date of filing: 13.09.2000
(51) Int. Cl.: F02B 23/10

(54) **In-cylinder direct-injection spark-ignition engine**
Direkteinspritzbrennkraftmaschine mit Fremdzündung
Moteur à combustion à injection directe et à allumage commandé

(30) Priority: 28.09.1999 JP 27526399
(43) Date of publication of application: 04.04.2001
(73) Proprietor: NISSAN MOTOR CO., LTD., Yokohama-shi, Kanagawa 221-0023 (JP)
(72) Inventor: Teraji, Atushi, Yokohama-shi, Kanagawa 232-0063 (JP); Yamaguchi, Koichi, Yokohama-shi, Kanagawa 244-0843 (JP); Naitou, Ken, Yonezawa-shi, Yamagata 992-0057 (JP)
(74) Representative: Weber, Joachim

(56) References cited:
- EP-A- 0 778 402
- EP-A- 0 879 942
- EP-A- 0 909 885
- EP-A- 0 924 402
- US-A- 5 720 253
- US-A- 5 913 554

## Description

### BACKGROUND OF THE INVENTION

### Field of the Invention

The present invention relates to the improvements of an in-cylinder direct-injection spark-ignition internal combustion engine equipped with an open combustion chamber type piston in which fuel is injected directly into engine cylinders and it is ignited by an electric spark, and specifically to techniques for effectively sustaining strong tumble flow for stable combustion (stable stratified combustion and stable homogeneous combustion), and capable of improving exhaust emission.

### Description of the Prior Art

In recent years, there have been proposed and developed various direct-injection spark-ignition engines with open combustion chamber type pistons. Generally, the direct-injection spark-ignition engine uses at least two combustion modes, namely a homogeneous combustion mode where fuel injection early in the intake stroke produces a homogeneous air-fuel mixture and a stratified combustion mode where late fuel-injection delays the event until the end of the compression stroke to produce a stratified air-fuel mixture. Such direct-injection spark-ignition engines with open combustion chamber type pistons have been disclosed in Japanese Patent Provisional Publication Nos. 11-62593 and 9-79038. In the direct-injection spark-ignition engine disclosed in the Japanese Patent Provisional Publication Nos. 11-62593 or 9-79038 has a piston bowl cavity combustion chamber having a circular-arc shape in cross section and recessed in a piston crown so that the cavity combustion chamber center is remarkably offset from the axis of the piston crown toward the intake valve side. The exhaust valve side of the piston crown is formed as a sloped convex portion being continuous with the edged portion of the circular-arc shaped cavity combustion chamber. Collision or impingement between fuel spray injected from a fuel injector toward the cavity combustion chamber at the end of the compression stroke during the stratified combustion mode and normal tumble airflow created within the combustion chamber promotes a diffusing action of fuel spray injected. This contributes to formation of more uniform air-fuel mixture, and prevents fuel spray from being diffused or dispersed than necessary.

### SUMMARY OF THE INVENTION

In the conventional direct-injection spark-ignition engines with piston bowl cavity combustion chambers as described previously, owing to the offset cavity combustion chamber and the convex portion on the exhaust valve side of the piston crown, it is possible to suppress fuel spray injected from the injector located nearby the intake valve to the cavity combustion chamber from being diffused toward the exhaust valve side than necessary, during engine operating conditions, such as at idle conditions, during which engine speed is low and comparatively weak normal tumble airflow occurs. However, due to the offset arrangement of the cavity combustion chamber there is a limit to a space of the cavity combustion chamber formed on the piston crown (in particular, a reduced linear dimension of the cavity combustion chamber in a direction of a stream line of normal tumble airflow). Additionally, the convex portion is formed on the exhaust valve side. Thus, there is an increased tendency for the strength of normal tumble airflow to be lowered or dampened during the compression stroke, and thus there is a possibility of reduced stratified combustion stability.

US 5 913 554 A which forms the closest state of the art, discloses an intake system construction for an internal combustion engine. A piston is provided with a cavity combustion chamber recessed in a piston crown. The cavity is partially of a semi-circular shape in the area between the intake part and the spark plug. The opposite side of the piston crown is formed with a squishing area.

Accordingly, it is an object of the invention to provide an in-cylinder direct-injection spark-ignition engine, which avoids the aforementioned disadvantages of the prior art.

It is another object of the invention to provide an in-cylinder direct-injection spark-ignition engine, which is capable of suppressing fuel spray from being diffused toward an exhaust valve side than necessary during low engine speed conditions, such as during idling, and of sustaining strong normal tumble airflow until near the end of a compression stroke for stable combustion (containing stable stratified combustion and stable homogeneous combustion) to enhance engine power output both at part-load operation (during a stratified combustion mode) and at high-load operation (during a homogeneous combustion mode), and of enhancing exhaust-emission control performance, while reducing particulate matter (PM) and smoke occurring owing to piston-bowl wetting, suppressing formation of unburned hydrocarbons (HCs), and reducing deposits of sooty carbon arising from undesirably increased fuel-spray penetration (undesired fuel travel).

According to the invention, the object is solved by the features of the main claim. The sub-claims contain further preferred developments of the invention.

In order to accomplish the aforementioned and other objects of the present invention, an in-cylinder direct-injection spark-ignition engine operable in at least a stratified charge combustion mode where fuel injection is executed on a compression stroke while introducing a normal tumble flow created on an intake stroke to an induced air drawn into a combustion chamber through an intake port, comprises a cylinder block having a cylinder, a piston movable through a stroke in the cylinder and having a cavity combustion chamber recessed in a piston crown and formed into a circular-arc shape in a flow direction of the normal tumble flow, a cylinder head mounted on the cylinder block, a spark plug located in a substantially central portion of the combustion chamber, and a fuel injector provided at a side wall portion of the combustion chamber and near an intake valve disposed in the intake port and having an injector nozzle for injecting fuel directly into the combustion chamber, characterized in that the cavity combustion chamber is formed in the piston crown so that the cavity combustion chamber extends from an intake valve side to an exhaust valve side, and as seen from a cross-sectional view from a direction perpendicular to the flow direction of the normal tumble flow, a recess of the cavity combustion chamber is circular-arc shaped in cross section by two different curved surfaces being continuous with each other and including a first curved surface located at the exhaust valve side and having a first predetermined radius of curvature and a second curved surface located at the intake valve side and having a second predetermined radius of curvature greater than the first predetermined radius of curvature. Both the centers of the first and the second curved surface lie substantially on the axis P. O of the piston.

### BRIEF DESCRIPTION OF THE DRAWINGS

Fig. 1 is a simplified cross-sectional view illustrating a piston bowl cavity combustion chamber employed in an in-cylinder direct-injection spark-ignition engine according to the present invention.
Fig. 2 is a cross-sectional view showing a structure of the cavity combustion chamber formed in the piston crown of the direct-injection engine according the present invention.
Fig.3 is a top view illustrating the piston crown of the direct-injection engine of the embodiment of the present invention.
Fig. 4 is a cross-sectional view explaining the position of an exhaust-valve side ridge line S **·** E1 of the cavity combustion chamber of the direct-injection engine of the embodiment of the present invention.
Fig. 5 is a cross-sectional view explaining the position of an intake-valve side ridge line S · E2 of the cavity combustion chamber of the direct-injection engine of the embodiment of the present invention.
Fig. 6 is a characteristic curve (test results) showing the relationship between combustion stability and a ratio d/D of a cavity combustion chamber width d to a cylinder bore D.
Fig. 7 is a characteristic curve (test results) showing the relationship between the position of the exhaust-valve side ridge line S·E1 of the cavity combustion chamber and combustion stability.
Fig. 8 is a characteristic curve (test results) showing the relationship between a radius of curvature of a circular-arc shaped recessed surface of the cavity combustion chamber and strength of tumbling action of normal tumble flow A.

### DESCRIPTION OF THE PREFERRED EMBODIMENTS

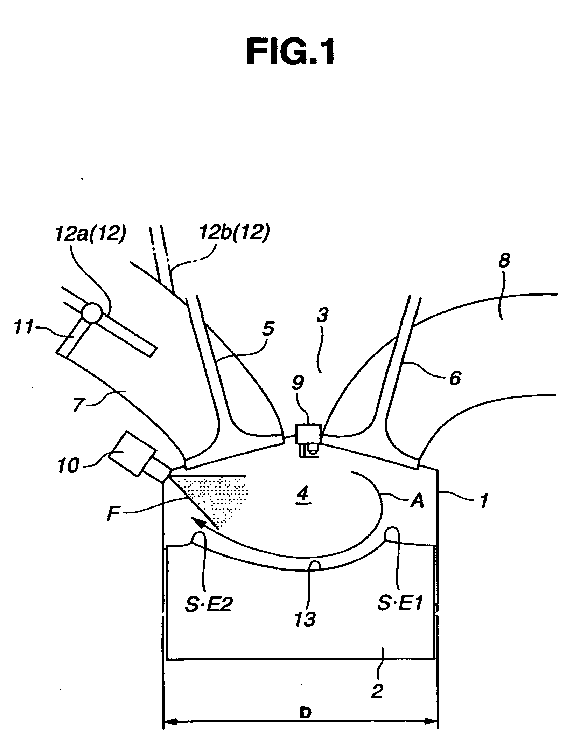

Referring now to the drawings, particularly to Fig. 1, the in-cylinder direct-injection spark-ignition engine of the invention is exemplified in a four-valve, gasoline-fuel spark-ignition internal combustion engine. As shown in Fig. 1, a plurality of engine cylinders are arranged in a cylinder block 1. A cylinder head 3 is mounted on cylinder block 1 to enclose cylinder bores. A piston 2 is slidably fitted into the-cylinder, and movable through a stroke in the cylinder. A pentroof combustion chamber 4 is formed or recessed in the bottom of cylinder head 3 like a shallow angled hemisphere and actually defined by the shallow-angled surface (the bottom face) of the cylinder head, the cylinder wall of the cylinder block, and the top surface (or the piston crown or piston head) of piston 2. As viewed from the cross section shown in Fig. 1. a pair of intake valves (5, 5) are disposed in the left-hand shallow-angled surface of pentroof combustion chamber 4, whereas a pair of exhaust valves (6, 6) are disposed in the right-hand shallow-angled surface of pentroof combustion chamber 4. As clearly seen in Figs. 1, 4 and 5, cylinder head 3 is equipped with two intake ports (7, 7) being offset from the cylinder centerline to the left-hand side (viewing Figs. 1, 4 and 5), and two exhaust ports (8, 8) being offset from the cylinder centerline to the right-hand side (in the opposite direction to the intake ports). As can be appreciated from Figs. 1. 4 and 5, the engine has a so-called cross-flow port structure. A spark plug 9 is installed in or screwed into cylinder head 3, so that spark plug 9 is located in a substantially central portion of the combustion chamber or a substantially cylinder center position surrounded by the four valves (5, 5, 6, 6). An electromagnetic fuel injector valve 10 (simply, a fuel injector), which is included in an electronic fuel injection system and formed into a substantially cylindrical shape, is disposed or arranged in the bottom of cylinder head 3 and provided at the cylinder wall (the combustion-chamber side wall portion) and near intake valves (5, 5) and arranged midway between the two intake valves (as seen from the top view), to ensure direct injection of fuel spray from injector 10 into combustion chamber 4. Each of intake ports (7, 7) is contoured to produce a tumbling action into the combustion chamber 4, in the form of a vertical vortex (in-cylinder normal tumble flow tumbling within the combustion chamber 4). As indicated by the arrow A in Fig. 1, normal tumble airflow A is produced such that intake air (or induced air drawn through the intake port) passes through the lower side of the spark plug 9, and is directed from the vicinity of the exhaust valves to the piston crown of piston 2, and then reversed on the piston crown, and redirected toward electrodes of the spark plug 9. In the direct-injection spark-ignition engine of the shown embodiment, a tumble-flow strengthening means or a tumble-flow strengthening mechanism 11 is also provided in each of two intake ports (7, 7) contained in each individual engine cylinder, in order to strengthen the normal tumble flow A created within combustion chamber 4 on the intake stroke during a stratified charge combustion mode where late fuel injection delays the event until near the end of the compression stroke to produce a stratified air-fuel mixture, and the flame begins in a small very rich air-fuel mixture layer around the tip of spark plug 9 and after ignition, and spreads to the leaner mixture filling the rest of the combustion chamber. The tumble-flow strengthening mechanism 11 is constructed by a partial shut-off valve capable of partially shutting off a substantially lower-half portion of the associated intake port (about one-half or more of the lateral cross-sectional area of intake port 7), during the stratified combustion mode. During the stratified combustion mode, the partial shut-off valve is switched to its closed position to close the substantially lower-half portion of the associated intake port. Conversely, during the homogeneous combustion mode, the partial shut-off valve is switched to its open position to open the substantially lower-half portion of the associated intake port. That is, the opening degree of each of the intake ports can be suppressed or switched between approximately 50% and 100% by means of the tumble-flow strengthening mechanism 11 (the partial shut-off valve). An airflow guide means 12 is also provided above and nearby the partial shut-off valve (the tumble-flow strengthening mechanism 11), for directing a mainstream of intake air to a substantially half portion (a substantially upper half portion) of the opening of intake port 7, facing to a substantially central portion of the combustion chamber, during the stratified combustion mode.

In the shown embodiment, the airflow guide means 12 is constructed by a partition wall 12a extending from a vicinity of the pivot shaft of the tumble-flow strengthening mechanism 11 (the partial shut-off valve) to a vicinity of the intake valve 5 for partially partitioning the internal space of the intake port 7 into upper and lower halves. In lieu thereof, as indicated by the hypothetical one-dotted line in Fig. 1, a sub-port 12b, serving as the previously-noted airflow guide means 12, may be formed in the upper wall portion of intake port 7 so that the sub-port is located near the intake valve 5 for injecting air from the intake-port upper wall portion into the combustion chamber and for producing a strong tumbling action into the combustion chamber in the normal tumble flow direction. To more effectively promote the tumbling action within combustion chamber 4, both of the airflow-guide partition wall 12a and the sub-port 12b may be provided in the intake port as airflow guide means.

On the other hand, a piston bowl cavity combustion chamber 13 is formed in the central portion of the piston crown of piston 2, so that the cavity combustion chamber is recessed into a circular-arc shape in the direction of a streamline of normal tumble flow A created or produced on the intake stroke.

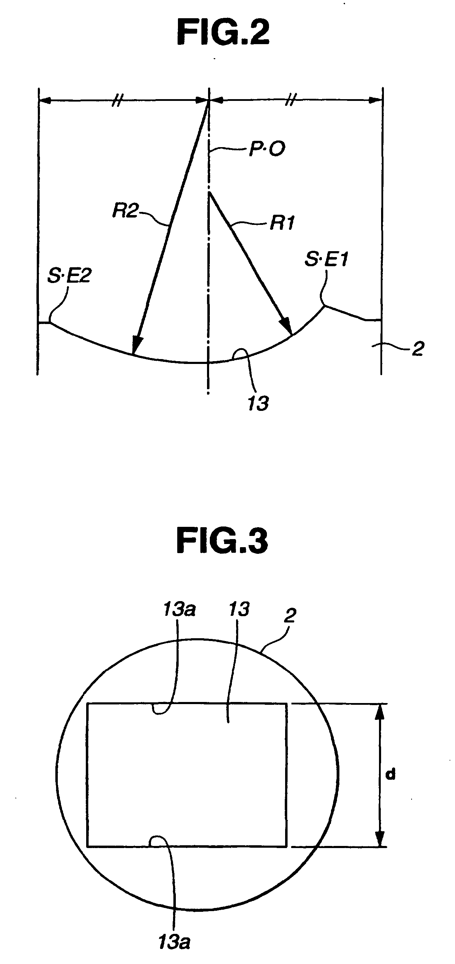

As shown in Figs. 2 and 3, the cavity combustion chamber 13 is formed in the piston crown so that the cavity combustion chamber is slightly offset to the intake valve side. As seen from the top view (see Fig. 3) of the piston crown, cavity combustion chamber 13 is formed into a substantially rectangular shape extending from the intake valve side to the exhaust valve side. In longitudinal cross section viewed from the direction perpendicular to normal tumble flow A (see Fig. 2), cavity combustion chamber 13 has a relatively great radius of curvature R₂ at the intake valve side and has a relatively small radius of curvature R₁ at the exhaust valve side. That is, the cavity combustion chamber is circular-arc shaped in cross section by way of two sorts of curved surfaces being continuous with each other, namely a first curved surface having the predetermined radius of curvature R₁ and a second curved surface having the predetermined radius of curvature R₂. Both of the center of the first curved surface having the radius of curvature R₁ and the center of the second curved surface having the radius of curvature R₂ lie substantially on the axis P·O of piston 2.

As discussed above, cavity combustion chamber 13 is recessed in the substantially center portion of the piston crown and formed into a circular-arc shape in the direction of the streamline of normal tumble flow A produced within the combustion chamber 4 on the intake stroke, so that the cavity combustion chamber extends from the intake valve side to the exhaust valve side. Normal tumble flow A can be easily effectively conserved or sustained by means of cavity combustion chamber 13. Additionally, tumble-flow strengthening mechanism 11, provided in the intake port, functions to create a strong normal tumble flow within combustion chamber 4, during the stratified combustion mode. The tumble-flow strengthening mechanism 11 cooperates with the cavity combustion chamber in a manner such that the strength of normal tumble flow A can be satisfactorily conserved or sustained from the intake stroke until near the end of the compression stroke. This enlarges or increases the stratified combustion mode operating range. As can be seen from the cross section shown in Fig. 1, when fuel is sprayed out or injected from injector 10 into combustion chamber 4 at the end of the compression stroke, fuel spray F is directed into the circular-arc shaped recess of cavity combustion chamber 13. Then, the fuel spray is brought into collision with the strong normal tumble flow A. This prevents or suppresses undesired piston-bowl wetting, that is, formation of a fuel film on the piston crown, and effectively finely atomizes the fuel spray. Furthermore, owing to the collision between fuel spray F and strong tumble flow A, fluid friction can be utilized at its maximum for the purpose of promoting fuel-spray vaporization and formation of ignitable air-fuel mixture. On the other hand, when fuel spray F is injected from injector 10 within toward cavity combustion chamber 13 under particular engine operating conditions, such as during engine idling during which engine speed is low and the strength of normal tumble flow A is comparatively weak, there is a tendency for the fuel spray to diffuse from the cavity combustion chamber 13 towards the upward part of the piston crown of the exhaust valve side due to fuel-spray penetration. Under the low engine speed conditions, the second curved surface of cavity combustion chamber 13 having the relatively great radius of curvature R₂ is useful to enhance the ability to conserve or sustain normal tumble flow A. On the other hand, the first curved surface of cavity combustion chamber 13 having the relatively small radius of curvature R₁ is useful to suppress fuel spray F from being diffused toward the upper place from the piston crown (the top surface of piston 2). In other words, the first curved surface of cavity combustion chamber 13 having the relatively small radius of curvature R₁ acts to efficiently receive or capture the fuel spray. Thus, the piston-bowl cavity combustion chamber structure of the embodiment can reconcile both the enhanced ability to conserve normal tumble flow A and suppression of undesirable diffusion (excessive diffusion) of fuel spray F during low speed operation such as during idling. As a consequence, in the direct-injection spark-ignition engine, it is possible to ensure stable stratified-charge combustion in a wide range from idling to high engine speed operation, to reduce smoke occurring due to piston-bowl wetting, to suppress formation of unburned hydrocarbons, and to prevent deposits of sooty carbon arising from undesirably increased fuel-spray penetration. Therefore, it is possible to enhance the stratified combustion stability and to improve exhaust emission.

Regarding the circular-arc shaped recess of cavity combustion chamber 13 composed of the previously-noted first and second curved surfaces, the center of the first curved surface of the radius of curvature R₁ and the center of the second curved surface of the radius of curvature R₂ lie substantially on the axis P·O of piston 2. As a result of this, the deepest portion of the recess of cavity combustion chamber 13 can be set at the central portion of the piston crown. Additionally, as seen from the top view of the piston crown (see Fig. 3), the cavity combustion chamber is formed into a substantially rectangular shape. The cavity combustion chamber is defined by the circular-arc shaped recess composed of the first and second curved surfaces respectively having the radius of curvature R₁ and the radius of curvature R₂, and two opposing side walls (13a, 13a) parallel to the streamline of the normal tumble flow A flowing along the cavity combustion chamber. Two opposing side walls (13a, 13a) can produce an effective focusing action for normal tumble flow A, thereby preventing or suppressing normal tumble flow A from escaping in a direction perpendicular to the flow direction of normal tumble flow A. Therefore, the ability to conserve or sustain normal tumble flow A can be further enhanced and as a result the stratified combustion stability can be more efficiently enhanced.

Furthermore, in the shown embodiment, a partial shut-off valve, capable of partially shutting off a substantially lower-half portion of the associated intake port (about one-half the lateral cross-sectional area of intake port 7) during the stratified combustion mode, is used as the tumble-flow strengthening mechanism 11. The partial shut-off valve is simple in structure and is advantageous from the viewpoint of design flexibility. Also, the partition wall 12a, serving as the airflow guide means 12 and functioning to divide intake port 7 into upper and lower halves, is provided above and nearby the partial shut-off valve. As set forth above, the partition wall 12a (airflow guide means 12) is designed or configured to direct a mainstream of intake air to a substantially half portion of the opening of intake port 7, facing to combustion chamber 4 and located close to the center of the combustion chamber, during the stratified combustion mode. Thus, the partition wall 12a functions to more effectively enhance the strength of normal tumble flow A produced within the combustion chamber during the stratified combustion mode.

On the other hand, during the homogeneous combustion mode, fuel is injected or sprayed out from injector 10 in the middle of the intake stroke. In the same manner as during the stratified combustion mode, the cross-sectional form of the circular-arc shaped recess of cavity combustion chamber 13 recessed in the piston crown is useful to enhance the ability to conserve or sustain normal tumble flow A during the homogeneous combustion mode. Owing to collision or impingement between fuel spray F and sustainable normal tumble flow A, it is possible to suppress undesirable piston-bowl wetting, and to effectively finely atomize fuel spray, and thus to promote fuel vaporization. As a result, ignitable air-fuel mixture spreads homogeneously throughout the combustion chamber. This ensures good homogeneous charge combustion. As can be appreciated from the above, during the homogeneous combustion mode it is possible to reduce smoke and unburned hydrocarbons (HCs) and to suppress deposits of sooty carbon, and therefore the combustion efficiency and engine power output can be enhanced.

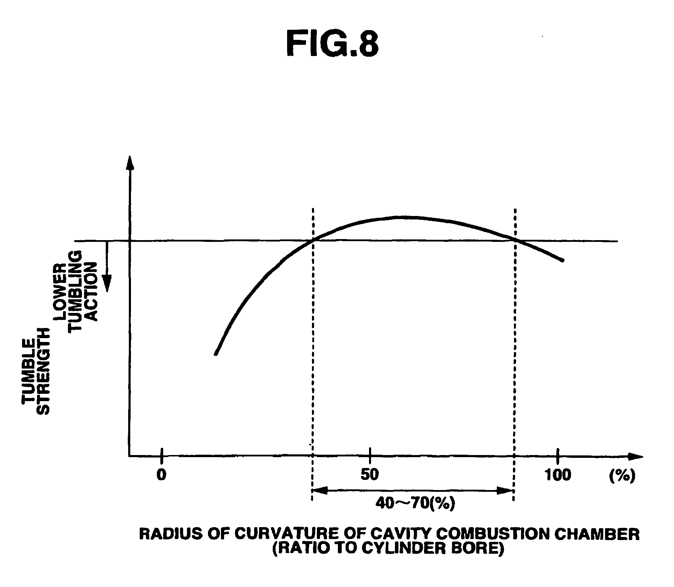

Hereupon, the strength of normal tumble flow A is greatly affected by a radius of curvature of the curved surface of the circular-arc shaped recess of cavity combustion chamber 13. This was experimentally assured by the inventors of the present invention. Fig. 8 shows test results indicating the relationship between the strength of normal tumble flow A and a ratio of radius of curvature of cavity combustion chamber 13 to cylinder bore. As can be seen from the test results of Fig. 8, when the ratio of radius of curvature of cavity combustion chamber to cylinder bore is approximately 50%, the strongest normal tumble flow is produced within the combustion chamber. When the ratio of radius of curvature to cylinder bore is less than 40% or above 70%, the strength of normal tumble flow is lowered. As can be seen from the test results shown in Fig. 8, it is preferable that the radius of curvature R₂ of the second curved surface of the circular-arc shaped recess of cavity combustion chamber 13 is set or dimensioned so that the ratio of radius of curvature to cylinder bore is greater than or equal to 50%, whereas the radius of curvature R₁ of the first curved surface of the circular-arc shaped recess of cavity combustion chamber 13 is set or dimensioned so that the ratio of radius of curvature to cylinder bore is within a specified ratio ranging from 40% to 70%. The proper setting of the ratio of radius of curvature to cylinder bore as previously discussed, ensures a strong normal tumble flow A within combustion chamber 4 on the intake stroke. This enhances homogeneous combustion stability as well as stratified combustion stability.

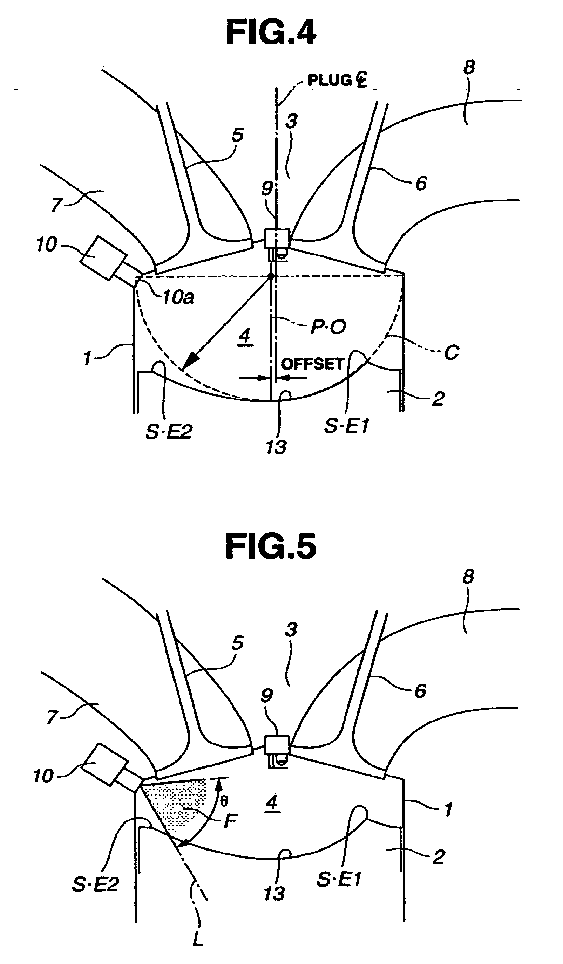

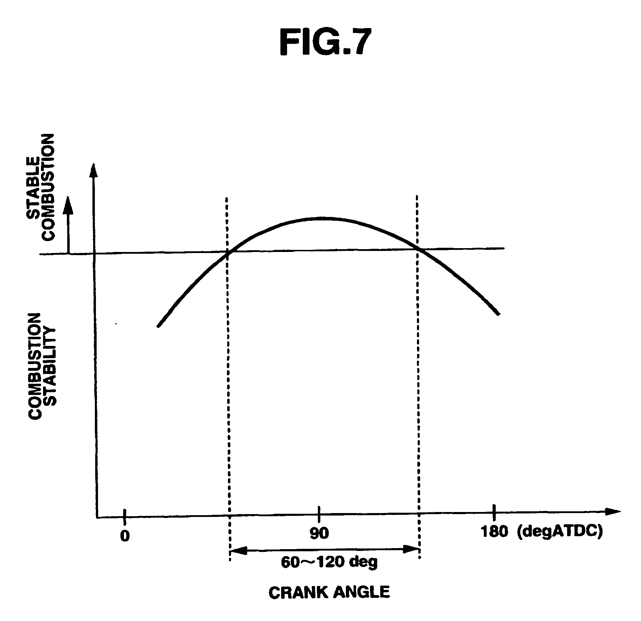

Moreover, the stratified combustion stability is greatly affected by the position of the exhaust-valve side ridge line S **·** E1 of cavity combustion chamber 13. This was experimentally assured by the inventors of the present invention. As shown in Figs. 4 and 7, under a specified condition where piston 2 reaches a position corresponding to 90 degrees after TDC (top dead center), a point on the axis P·O of piston 2 and lying at the same level as a tip of an injection nozzle 10a of injector 10, is regarded as a center of a circle (exactly, a semicircle or a circular arc C). As best seen in Fig. 4, suppose that the semicircle or the circular arc C with a radius corresponding to half the cylinder bore D and the center corresponding to the point on the piston axis P·O and lying at the same level as the tip of the injection nozzle 10a is drawn under the specified condition where piston 2 reaches a position corresponding to 90 degrees after TDC. In order to provide the best stratified combustion stability, it is preferable to set the exhaust-valve side ridge line S **·** E1 of cavity combustion chamber 13 at a position where the circular arc C and the piston crown (the top surface of piston 2) intersect each other or come into contact with each other under a specified condition where the piston reaches a position corresponding to a crank angle ranging from 60 degrees after top dead center to 120 degrees after top dead center, for the reasons discussed hereunder. That is to say, if the position where the circular arc C and the piston crown intersect each other under a condition where piston 2 moves down and reaches a position corresponding to a crank angle before 60 degrees after TDC or a position corresponding to a crank angle after 120 degrees after TDC on the intake stroke, is set as the exhaust-valve side ridge line S · E1 of cavity combustion chamber 13, there is an increased tendency for the stratified charge combustion to become unstable (see Fig. 7). For the reasons set forth above, it is more preferable that the exhaust-valve side ridge line S · E1 of cavity combustion chamber 13 is set at a position where the piston crown and the circular arc C (with a center corresponding to a point on the piston axis P**·**O and lying at the same level as the tip of the injection nozzle 10a and a radius D/2 corresponding to half the cylinder bore D) intersect each other or come into contact with each other under the specified condition where piston 2 reaches a position corresponding to a crank angle ranging 60 degrees ATDC (after top dead center) to 120 degrees ATDC. By virtue of optimal setting of the position of the exhaust-valve side ridge line S · E1, it is possible to effectively prevent normal tumble flow A from being brought into collision with the exhaust-valve side ridge line S · E1 of cavity combustion chamber 13, during the maximum flow velocity of intake air (that is, at a crank angle ranging from 60 degrees ATDC to 120 degrees ATDC). As discussed above, the position of the exhaust-valve side ridge line S **·** E1 is set at a position where the normal tumble flow A is not brought into collision with the ridge line S · E1 at a timing when the intake air reaches the maximum flow velocity during the intake stroke, thus effectively promoting or accelerating the normal tumble flow A, and thereby more effectively enhancing the stratified combustion stability.

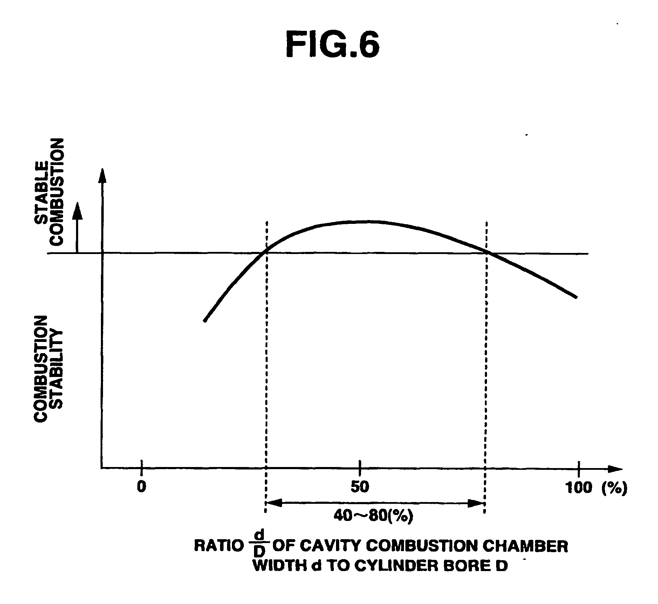

Regarding the intake-valve side ridge line S · E2 of cavity combustion chamber 13, as can be seen from the cross-sectional view shown in Fig. 5, the intake-valve side ridge line S · E2 of cavity combustion chamber 13 is set at a position closer to a cylinder wall of the intake valve side, as compared to a position where the lower end line L of conical fuel spray F intersects the piston crown under atmospheric pressure at an injection timing (a timing of the start of injection) corresponding to a crank angle ranging from 80 degrees BTDC (before top dead center) to 30 degrees BTDC during the stratified combustion mode. By virtue of optimal setting of the intake-valve side ridge line S **·** E2 of cavity combustion chamber 13, during the stratified combustion mode there is no risk of collision between the ridge line S · E2 and fuel spray F injected from injector 10 and almost all of fuel spray F injected can be reliably received by means of the circular-arc shaped recess of cavity combustion chamber 13. Thus, it is possible to more efficiently promote formation of ignitable air-fuel mixture, and also to avoid or suppress undesirable formation of fuel film adhering onto the piston crown surrounding the cavity combustion chamber. As a result, the combustibility of stratified charge combustion can be more effectively enhanced. Additionally, during the homogeneous charge combustion mode homogenization of fuel can be promoted, thus enhancing the combustibility of homogeneous charge combustion.

From the viewpoint of enhanced combustion stability, it is important to optimally set or determine the width d of the opening of the circular-arc shaped recess of cavity combustion chamber 13 formed into a substantially rectangular shape (from the top view shown in Fig. 3), the width d measured in the perpendicular direction to the streamline of normal tumble flow A. Fig. 6 shows test results indicating the relationship between the combustion stability and a ratio d/D of cavity combustion chamber width d to cylinder bore D. The test results of Fig. 6 were assured by the inventors of the present invention. As can be seen from the characteristic curve of Fig. 6, when the ratio d/D of cavity combustion chamber width d to cylinder bore D is approximately 50%, the highest stratified combustion stability is obtained. In case of an excessively narrow cavity combustion chamber width d corresponding to a width less than or equal to the ratio d/D of 40%, the narrow cavity combustion chamber cannot adequately receive fuel spray F injected. In such a case, the fuel spray may undesiredly diffuse outside of the narrow cavity combustion chamber. As a result of this, combustion becomes unstable. In contrast to the above, in case of an excessively wide cavity combustion chamber width d corresponding to a width greater than or equal to the ratio d/D of 80%, the wide cavity combustion chamber permits excessive diffusion of fuel spray F within the cavity combustion chamber. Excessive diffusion of fuel spray induces unstable combustion. As discussed above, it is preferable that the cavity combustion chamber width d, measured in the perpendicular direction to the streamline of normal tumble flow A, is set or determined so that the ratio d/D of cavity combustion chamber width d to cylinder bore D ranges from 40% to 80%. With the optimal ratio d/D ranging from 40% to 80%, it is possible to enhance both the ability to retain fuel spray F within the cavity combustion chamber and the ability to promote normal tumble flow A. This ensures stable stratified charge combustion and stable homogeneous charge combustion.

Additionally, for the purpose of providing an optimal fuel-spray penetration (optimal fuel-spray travel), it is preferable to set a spray angle *θ* of fuel spray F at an angle ranging from 40 degrees to 80 degrees under atmospheric pressure. An excessively small spray angle below 40 degrees produces an undesirably increased strong fuel-spray penetration, thereby resulting in undesirable impingement of fuel spray on the piston crown, often abbreviated to "spray/piston-crown impingement", that is, undesirable piston-crown wetting. Conversely, an excessively large spray angle above 80 degrees produces an excessively weak spray penetration, thus permitting fuel spray to widely diffuse within the combustion chamber. In such a case, there results in undesirable impingement of fuel spray on the cylinder wall or on the cylinder head, often abbreviated to "spray/wall impingement". The spray/piston-crown impingement and spray/wall impingement increase smoke and deposits of sooty carbon on the insulator of spark plug 9 around the center electrode, thus deteriorating the combustibility. In addition to the optimal setting of spray angle *θ* (see Figs. 1 and 5), it is also important to optimize the mounting angle (setting angle) of injector 10. In order to avoid fuel spray F from adhering to the piston crown of piston 2, it is preferable to arrange the axis of nozzle 10a of injector 10 so that the uppermost end of fuel spray F is set to lie in a horizontal position. Also, it is necessary or desirable to arrange the axis of nozzle 10a of injector 10 such that the lower end of fuel spray F does not adhere directly to the piston crown at the end of fuel injection. In order to avoid the undesirable spray/piston-crown impingement and to reliably carry rich air-fuel mixture layer toward the tip of spark plug 9, it is preferable to mount the injector nozzle of injector 10 on the cylinder head at a depression angle ranging from 20 degrees to 40 degrees with respect to the horizontal direction. As can be appreciated from the above, the optimal spray angle *θ* and the optimal setting angle of injector 10, contributes to stabilization of stratified combustion and improvement of exhaust emission.

As previously described, spark plug 9 is located in the substantially central position of combustion chamber 4, in a manner such that the electrodes of spark plug 9 are exposed to the substantially central portion of combustion chamber 4. From the viewpoint of a good ignitability during the stratified combustion mode at low-speed part-load operation, it is more preferable to set the spark plug at a position where the center line of spark plug 9 is slightly offset from the axis P·O of piston 2 toward the exhaust valve side. This is because the strength of normal tumble flow A is comparatively weak at low engine speed operations, such as during idling, there is a tendency for fuel spray F injected from injector 10 to be unevenly distributed. Under such a low-speed condition, assuming that the installation position of the spark plug is slightly offset from the piston axis P·O to the exhaust valve side, the air-fuel mixture unevenly existing in the exhaust valve side of the combustion chamber can be easily certainly ignited. That is, the previously-noted slight offset arrangement of spark plug 9 enhances the ignitability even during the stratified combustion mode at low-speed operations. This insures stable stratified charge combustion.

In the piston-bowl cavity combustion chamber structure of the embodiment, although the piston crown except cavity combustion chamber 13 is constructed as a sloped surface, in lieu thereof, the piston crown except cavity combustion chamber 13 may be constructed as a flat surface. It will be appreciated that the flat-faced piston crown surrounding cavity combustion chamber 13 can also provide the same effects as the sloped piston crown surrounding cavity combustion chamber 13.

## Claims

1. An in-cylinder direct-injection spark-ignition engine operable in at least a stratified charge combustion mode where fuel injection is executed on a compression stroke while introducing a normal tumble flow (A) created on an intake stroke to an inducedair drawn into a combustion chamber (4) through an intake port (7), comprising:
a cylinder block (1) having a cylinder;
a piston (2) movable through a stroke in the cylinder, and having a cavity combustion chamber (13) recessed in a piston crown and formed into a circular-arc shape in a flow direction of the normal tumble flow (A);
a cylinder head (3) mounted on said cylinder block (1) ;
a spark plug (9) located in a substantially central portion of the combustion chamber (4); and
a fuel injector (10) provided at a side wall portion of the combustion chamber (4) and near an intake valve (5) disposed in the intake port (7), and having an injector nozzle (10a) for injecting fuel directly into the combustion chamber (4),
**characterized in that** the cavity combustion chamber (13) is formed in the piston crown so that the cavity combustion chamber extends from an intake valve side to an exhaust valve side, and as seen from a cross-sectional view from a direction perpendicular to the flow direction of the normal tumble flow (A), a recess of the cavity combustion chamber (13) is circular-arc shaped in cross section by two different curved surfaces being continuous with each other and including a first curved surface located at the exhaust valve side and having a first predetermined radius of curvature (R₁) and a second curved surface located at the intake valve side and having a second predetermined radius of curvature (R₂) greater than the first predetermined radius of curvature, and both of a center of the first curved surface having the first predetermined radius of curvature (R₁) and a center of the second curved surface having the second predetermined radius of curvature (R₂) lie substantially on an axis (P**·**O) of the piston (2).

2. The in-cylinder direct-injection spark-ignition engine as claimed in claim 1, **characterized in that** the first predetermined radius of curvature (R₁) of the first curved surface of the cavity combustion chamber (13) is dimensioned so that a ratio of the first predetermined radius of curvature (R₁) to a cylinder bore (D) is within a specified ratio ranging from 40% to 70%, and the second predetermined radius of curvature (R₂) of the second curved surface of the cavity combustion chamber (13) is dimensioned so that a ratio of the second predetermined radius of curvature (R₂) to the cylinder bore (D) is greater than or equal to 50%.

3. The in-cylinder direct-injection spark-ignition engine as claimed in any one of preceding claims, **characterized in that** a ridge line (S · E1) of the cavity combustion chamber (13), located at the exhaust valve side, is set at a position where the piston crown and a circular arc (C) intersect each other or come into contact with each other under a specified condition where the piston reaches a position corresponding to a crank angle ranging from 60 degrees after top dead center to 120 degrees after top dead center, said circular arc (C) having a radius (D/2) corresponding to half the cylinder bore (D) and a center corresponding to a point on the axis (P·O) of the piston and lying at a same level as a tip of the injector nozzle (10a).

4. The in-cylinder direct-injection spark-ignition engine as claimed in any one of preceding claims, **characterized in that** a ridge line (S **·** E2) of the cavity combustion chamber (13), located at the intake valve side, is set at a position closer to a cylinder wall of the intake valve side, as compared to a position where a lower end line of fuel spray (F) injected from the injector (10) intersects the piston crown under atmospheric pressure at an injection timing corresponding to a crank angle ranging from 80 degrees before top dead center to 30 degrees before top dead center during the stratified charge combustion mode.

5. The in-cylinder direct-injection spark-ignition engine as claimed in any one of preceding claims, **characterized in that** as seen from a top view of the piston crown, the cavity combustion chamber (13) is formed into a substantially rectangular shape, and a width (d) of an opening of the cavity combustion chamber (13), measured in a direction perpendicular to the flow direction of the normal tumble flow (A), is dimensioned so that a ratio (d/D) of the width (d) to the cylinder bore (D) is within a specified ratio ranging from 40% to 80%.

6. The in-cylinder direct-injection spark-ignition engine as claimed in any one of preceding claims, **characterized in that** a tumble-flow strengthening means (11) is provided in the intake port (7) for strengthening the normal tumble flow (A).

7. The in-cylinder direct-injection spark-ignition engine as claimed in claim 6, **characterized in that** the tumble-flow strengthening means comprises a partial shut-off valve capable of partially shutting off a substantially lower-half portion of the intake port (7) substantially corresponding to one-half or more of a lateral cross-sectional area of the intake port during the stratified charge combustion mode, and of fully opening the substantially lower-half portion of the intake port (7) during a homogeneous charge combustion mode where fuel injection early in the intake stroke produces a homogeneous air-fuel mixture.

8. The in-cylinder direct-injection spark-ignition engine as claimed in claim 7, **characterized in that** an airflow guide means (12) is provided above and nearby the partial shut-off valve, for directing a mainstream of the induced air to a substantially half portion of an opening of the intake port (7), facing to a substantially central portion of the combustion chamber (4), during the stratified charge combustion mode.

9. The in-cylinder direct-injection spark-ignition engine as claimed in claim 8, **characterized in that** the airflow guide means (12) comprises at least one of a partition wall (12a) extending from a vicinity of the tumble-flow strengthening means to a vicinity of the intake valve (5) for partially partitioning an internal space of the intake port (7) into upper and lower halves, and a sub-port (12b) formed in an upper wall portion of the intake port (7) near the intake valve (5) for injecting air from the upper wall portion of the intake port into the combustion chamber and for producing a strong tumbling action into the combustion chamber in a normal tumble flow direction.

10. The in-cylinder direct-injection spark-ignition engine as claimed in any one of preceding claims, **characterized in that** a spray angle (*θ*) of fuel spray (F) injected from the injector nozzle (10a) is set at an angle ranging from 40 degrees to 80 degrees under atmospheric pressure, and a setting angle of the injector nozzle (10a) of the fuel injector (10) is set at a depression angle ranging from 20 degrees to 40 degrees.

11. The in-cylinder direct-injection spark-ignition engine as claimed in any one of preceding claims, **characterized in that** the sparkplug (9) is set at a position where a centerline of the spark plug is offset from the axis (P·O) of the piston (2) toward the exhaust valve side.

12. The in-cylinder direct-injection spark-ignition engine as claimed in claim 5, **characterized in that** the cavity combustion chamber (13) is defined by a circular-arc shaped recess composed of the first and second curved surfaces respectively having the first predetermined radius of curvature (R₁) and the second predetermined radius of curvature (R₂), and two opposing side walls (13a, 13a) parallel to a streamline of the normal tumble flow (A) flowing along the cavity combustion chamber for producing a focusing action for the normal tumble flow (A) and for preventing the normal tumble flow (A) from escaping in the direction perpendicular to the flow direction of the normal tumble flow (A).

13. The in-cylinder direct-injection spark- ignition engine as claimed in claim 1, **characterized in that** the combustion chamber (4) is apentroof combustion chamber, the circular-arc shaped recess of the cavity combustion chamber (13) of the piston (2) is defined by the first and second curved surfaces and two opposing side walls (13a, 13a) parallel to a streamline of the normal tumble flow (A), the deepest portion of the circular-arc shaped recess of the cavity combustion chamber (13) is set at a central portion of the piston crown, the first curved surface, having the first predetermined radius of curvature (R₁), ranges from the deepest portion to the exhaust valve side, whereas the second curved surface, having the second predetermined radius of curvature (R₂) greater than the first predetermined radius of curvature (R₁), ranges from the deepest portion to the intake valve side, and a ridge line (S **·** E1) is defined by a borderline between the piston crownof the exhaust valve side and the first curved surface ranging from the deepest portion to the exhaust valve side.

## Revendications

1. Moteur à combustion à injection directe et à allumage commandé, qui est apte à fonctionner dans au moins un mode de combustion à charge stratifiée, dans lequel une injection de carburant est exécutée sur une course de compression tout en introduisant un flux en tourbillon transversal normal (A) créé sur une course d'admission vers une aspiration d'air induite à l'intérieur d'une chambre de combustion (4) par le biais d'un orifice d'admission (7), le moteur comprenant :
un bloc cylindres (1) comprenant un cylindre ;
un piston (2) déplaçable sur une course à l'intérieur du cylindre, et ayant une chambre de combustion formant cavité (13) située en renfoncement dans une calotte de piston et réalisée sous la forme d'un arc circulaire dans une direction d'écoulement du flux en tourbillon transversal normal (A) ;
une culasse (3) montée sur ledit bloc cylindres (1);
une bougie d'allumage (9) disposée dans une portion sensiblement centrale de la chambre de combustion (4) ; et
un injecteur de carburant (10) prévu au niveau d'une partie de paroi latérale de la chambre de combustion (4) et à proximité d'une soupape d'admission (5) placée dans l'orifice d'admission (7), et comprenant une buse d'injecteur (10a) pour injecter du carburant directement à l'intérieur de la chambre de combustion (4),
**caractérisé en ce que** la chambre de combustion formant cavité (13) est réalisée à l'intérieur d'une calotte de piston de telle sorte que la chambre de combustion formant cavité s'étend depuis un côté de soupape d'admission vers un côté de soupape d'échappement et, comme il ressort d'une vue en coupe transversale depuis une direction perpendiculaire à la direction de l'écoulement du flux à tourbillon transversal normal (A), un renfoncement de la chambre de combustion formant cavité (13) est réalisé en section transversale sous la forme d'un arc circulaire par deux surfaces courbes différentes qui sont continues l'une à l'autre, et comprenant une première surface courbe située au niveau du côté de soupape d'échappement et ayant un premier rayon de courbure prédéterminé (R₁) et une deuxième surface courbe située au niveau du côté de soupape d'admission et ayant un deuxième rayon de courbure prédéterminé (R₂) qui est plus grand que le premier rayon de courbure prédéterminé, et un centre de la première surface courbe ayant le premier rayon de courbure prédéterminé (R₁) et un centre de la deuxième surface courbe ayant le deuxième rayon de courbure prédéterminé (R₂) se situent tous les deux sensiblement sur un axe (P • O) du piston (2).

2. Moteur à combustion à injection directe et à allumage commandé selon la revendication 1, **caractérisé en ce que** le premier rayon de courbure prédéterminé (R₁) de la première surface courbe de la chambre de combustion formant cavité (13) est dimensionné de telle sorte qu'un rapport du premier rayon de courbure prédéterminé (R₁) à un alésage de cylindre (D) se situe à l'intérieur d'un rapport spécifié allant de 40 % à 70 %, et que le deuxième rayon de courbure prédéterminé (R₂) de la deuxième surface courbe de la chambre de combustion formant cavité (13) est dimensionné de telle sorte qu'un rapport du deuxième rayon de courbure prédéterminé (R₂) à l'alésage de cylindre (D) est supérieur ou égal à 50 %.

3. Moteur à combustion à injection directe et à allumage commandé selon l'une quelconque des revendications précédentes, **caractérisé en ce qu'**une ligne de faîte (S • E1) de la chambre de combustion formant cavité (13), située au niveau du côté de soupape d'échappement, est définie à une position où la calotte de piston et un arc circulaire (C) se coupent ou viennent en contact l'un avec l'autre dans une condition précise où le piston atteint une position correspondant à une position angulaire du vilebrequin allant de 60 degrés après le point mort haut à 120 degrés après le point mort haut, ledit arc circulaire (C) ayant un rayon (D/2) correspondant à la moitié de l'alésage de cylindre (D) et un centre correspondant à un point sur l'axe (P **•** O) du piston et situé à un même niveau qu'une extrémité de la buse d'injecteur (10a).

4. Moteur à combustion à injection directe et à allumage commandé selon l'une quelconque des revendications précédentes, **caractérisé en ce qu'**une ligne de faîte (S • E2) de la chambre de combustion formant cavité (13), située au niveau du côté de soupape d'admission, est définie à une position qui est plus proche d'une paroi de cylindre du côté de soupape d'admission que d'une position où une ligne d'extrémité inférieure d'une pulvérisation de carburant (F) injectée par l'injecteur (10) coupe la calotte de piston dans des conditions de pression atmosphérique à un instant d'injection correspondant à une position angulaire du vilebrequin allant de 80 degrés avant le point mort haut à 30 degrés avant le point mort haut au cours du mode de combustion à charge stratifiée.

5. Moteur à combustion à injection directe et à allumage commandé selon l'une quelconque des revendications précédentes, **caractérisé en ce que**, comme il ressort d'une vue de dessus de la calotte de piston, la chambre de combustion formant cavité (13) est réalisée sous une forme sensiblement rectangulaire, et qu'une largeur (d) d'une ouverture de la chambre de combustion formant cavité (13), mesurée dans une direction perpendiculaire à la direction de l'écoulement du flux à tourbillon transversal normal (A), est dimensionnée de telle sorte qu'un rapport (d/D) de la largeur (d) à l'alésage de cylindre (D) se situe à l'intérieur d'un rapport spécifié allant de 40 % à 80 %.

6. Moteur à combustion à injection directe et à allumage commandé selon l'une quelconque des revendications précédentes, **caractérisé en ce que** des moyens (11) de renforcement du flux à tourbillon transversal sont prévus à l'intérieur de l'orifice d'admission (7) afin de renforcer le flux à tourbillon transversal normal (A).

7. Moteur à combustion à injection directe et à allumage commandé selon la revendication 6, **caractérisé en ce que** les moyens de renforcement du flux à tourbillon transversal comprennent une soupape d'arrêt partielle qui est apte à fermer partiellement une portion de moitié sensiblement inférieure de l'orifice d'admission (7) correspondant sensiblement à une moitié ou plus d'une zone en section transversale de l'orifice d'admission au cours du mode de combustion à charge stratifiée, et qui est apte à ouvrir complètement la portion de moitié sensiblement inférieure de l'orifice d'admission (7) au cours d'un mode de combustion de charge homogène dans lequel une injection de carburant précoce durant la course d'admission produit un mélange air carburant homogène.

8. Moteur à combustion à injection directe et à allumage commandé selon la revendication 7, **caractérisé en ce que** des moyens (12) de guidage d'un débit d'air sont prévus en dessus et à proximité de la soupape d'arrêt partielle, de façon à diriger un écoulement principal de l'air induit vers une portion sensiblement égale à la moitié d'une ouverture de l'orifice d'admission (7), qui fait face à une portion sensiblement centrale de la chambre de combustion (4), au cours du mode de combustion à charge stratifiée.

9. Moteur à combustion à injection directe et à allumage commandé selon la revendication 8, **caractérisé en ce que** les moyens (12) de guidage d'un débit d'air comprennent au moins une d'une cloison de séparation (12a) s'étendant depuis une proximité des moyens de renforcement du flux à tourbillon transversal vers une proximité de la soupape d'admission (5) de façon à diviser partiellement un espace interne de l'orifice d'admission (7) en des moitiés supérieure et inférieure, et d'un orifice auxiliaire (12b) formé dans une portion de paroi supérieure de l'orifice d'admission (7) à proximité de la soupape d'admission (5) de façon à injecter de l'air depuis la portion de paroi supérieure de l'orifice d'admission dans la chambre de combustion et à produire une action de tourbillon transversal vigoureuse à l'intérieur de la chambre de combustion dans une direction d'un flux à tourbillon transversal normal.

10. Moteur à combustion à injection directe et à allumage commandé selon l'une quelconque des revendications précédentes, **caractérisé en ce qu'**un angle de pulvérisation (θ) d'une pulvérisation de carburant (F) injectée par la buse d'injecteur (10a) est défini à un angle allant de 40 degrés à 80 degrés dans des conditions de pression atmosphérique, et un angle de réglage de la buse d'injecteur (10a) de l'injecteur de carburant (10) est défini à un angle de dépression allant de 20 degrés à 40 degrés.

11. Moteur à combustion à injection directe et à allumage commandé selon l'une quelconque des revendications précédentes, **caractérisé en ce que** la bougie d'allumage (9) est définie à une position où une ligne médiane de la bougie d'allumage est décalée par rapport à l'axe (P **•** O) du piston (2) vers le côté de soupape d'échappement.

12. Moteur à combustion à injection directe et à allumage commandé selon la revendication 5, **caractérisé en ce que** la chambre de combustion formant cavité (13) est définie par un renfoncement en forme d'arc circulaire composé des première et deuxième surfaces courbes ayant respectivement le premier rayon de courbure prédéterminé (R₁) et le deuxième rayon de courbure prédéterminé (R₂), et par deux parois latérales (13a, 13a) qui se font face parallèlement à une ligne de flux du flux à tourbillon transversal normal (A) s'écoulant le long de la chambre de combustion formant cavité afin de produire une action de concentration du flux à tourbillon transversal normal (A) et afin d'empêcher le flux à tourbillon transversal normal (A) de s'échapper dans la direction perpendiculaire à la direction de l'écoulement du flux à tourbillon transversal normal (A).

13. Moteur à combustion à injection directe et à allumage commandé selon la revendication 1, **caractérisé en ce que** la chambre de combustion (4) est une chambre de combustion à toit en appentis, le renfoncement en forme d'arc circulaire de la chambre de combustion formant cavité (13) du piston (2) est défini par les première et deuxième surfaces courbes et les deux parois latérales (13a, 13a) qui se font face parallèlement à une ligne de flux du flux à tourbillon transversal normal (A), la portion la plus profonde du renfoncement en forme d'arc circulaire de la chambre de combustion formant cavité (13) est définie au niveau d'une partie centrale de la calotte de piston, la première surface courbe ayant le premier rayon de courbure prédéterminé (R₁) s'étend depuis la portion la plus profonde vers le côté de soupape d'échappement, tandis que la deuxième surface courbe ayant le deuxième rayon de courbure prédéterminé (R₂) qui est plus grand que le premier rayon de courbure prédéterminé (R₁) s'étend depuis la portion la plus profonde vers le côté de soupape d'admission, et une ligne de faîte (S • E1) est définie par une ligne de bordure entre la calotte de piston du côté de soupape d'échappement et la première surface courbe allant de la portion la plus profonde vers le côté de soupape d'échappement.

## Patentansprüche

1. Direkteinspritzbrennkraftmaschine mit Fremdzündung, die zumindest bei einem Schichtladungs-Verbrennungsbetrieb betriebsfähig ist, wobei eine Kraftstoffeinspritzung bei einem Verdichtungstakt ausgeführt wird, indem eine normale Tumble-Strömung (A) eingesetzt wird, die bei einem Ansaugtakt an eingeleiteter Luft erzeugt wird, die in einen Brennraum (4) durch einen Ansaugkanal (7) eingezogen wird:
mit einem Zylinderblock (1), der einen Zylinder aufweist;
mit einem Kolben (2), der durch einen Hub im Zylinder beweglich ist und eine Brennraumvertiefung (13) aufweist, die in einem Kolbenboden ausgespart ist und in einer kreisbogenförmigen Form in einer Strömungsrichtung der normalen Tumble-Strömung (A) ausgebildet ist;
mit einem Zylinderkopf (3), der auf den Zylinderblock (1) montiert ist;
mit einer Zündkerze (9), die in einem im Wesentlichen mittigen Bereich des Brennraums (4) angeordnet ist; und
mit einem Kraftstoff-Injektor (10), der an einem Seitenwandbereich des Brennraums (4) und in der Nähe eines im Ansaugkanal (7) angeordneten Einlassventils (5) vorgesehen ist, und eine Einspritzdüse (10a) aufweist, um Kraftstoff direkt in den Brennraum (4) einzuspritzen,
**dadurch gekennzeichnet, dass** die Brennraumvertiefung (13) im Kolbenboden so ausgebildet ist, dass sich die Brennraumvertiefung von einer Einlassventilseite zu einer Auslassventilseite erstreckt und eine Ausnehmung der Brennraumvertiefung (13), wie aus einer senkrecht zur Strömungsrichtung der normalen Tumble-Strömung (A) gesehenen Querschnittsansicht ersichtlich, durch zwei unterschiedliche gekrümmte Oberflächen im Querschnitt kreisbogenförmig geformt ist, die ineinander übergehen und eine erste gekrümmte Oberfläche, die an der Auslassventilseite liegt und einen ersten vorgegebenen Krümmungsradius (R₁) aufweist und eine zweite gekrümmte Oberfläche, die an der Einlassventilseite liegt, die einen zweiten vorgegebenen Krümmungsradius (R₂), der größer als der erste vorgegebene Krümmungsradius ist, aufweist, umfassen und sowohl ein Mittelpunkt der ersten gekrümmten Oberfläche mit dem ersten vorgegebenen Krümmungsradius (R₁), als auch ein Mittelpunkt der zweiten gekrümmten Oberfläche mit dem zweiten vorgegebenen Krümmungsradius (R₂) im Wesentlichen auf einer Achse (P·O) des Kolbens liegen.

2. Direkteinspritzbrennkraftmaschine mit Fremdzündung gemäß Anspruch 1, **dadurch gekennzeichnet, dass** der erste vorgegebene Krümmungsradius (R₁) der ersten gekrümmten Oberfläche der Brennraumvertiefung (13) so dimensioniert ist, dass ein Verhältnis des ersten vorgegebenen Krümmungsradius (R₁) zu einem Zylinderdurchmesser (D) innerhalb eines bestimmten Verhältnisses liegt, das von 40% - 70% reicht, und der zweite vorgegebene Krümmungsradius (R₂) der zweiten gekrümmten Oberfläche der Brennraumvertiefung (13) so dimensioniert ist, dass ein Verhältnis des zweiten vorgegebenen Krümmungsradius (R₂) zum Zylinderdurchmesser (D) größer oder gleich 50% ist.

3. Direkteinspritzbrennkraftmaschine mit Fremdzündung gemäß einem der vorausgehenden Ansprüche, **dadurch gekennzeichnet, dass** eine Gratlinie (S·E1) der Brennraumvertiefung (13), die an der Auslassventilseite liegt, an einer Position festgelegt ist, wo der Kolbenboden und ein Kreisbogen (C) einander in einer bestimmten Stellung schneiden oder in Kontakt geraten, bei der der Kolbenboden eine Position erreicht, die einem Kurbelwinkel entspricht, der von 60 Grad nach einem oberen Totpunkt bis zu 120 Grad nach einem oberen Totpunkt reicht, wobei der Kreisbogen (C) einen Radius (D/2), der dem halben Zylinderdurchmesser (D) entspricht, und einen Mittelpunkt aufweist, der einem Punkt auf der Achse (P-0) des Kolbens entspricht und auf dem gleichen Niveau wie eine Spitze der Einspritzdüse (10a) liegt.

4. Direkteinspritzbrennkraftmaschine mit Fremdzündung gemäß einem der vorausgehenden Ansprüche, **dadurch gekennzeichnet, dass** eine Gratlinie (S·E1) der Brennraumvertiefung (13), die an der Auslassventilseite liegt, an einer zu einer Zylinderwand der Auslassventilseite näheren Position, verglichen mit einer Position festgelegt ist, bei der eine untere Endlinie des vom Injektor (10) eingespritzten Kraftstoffsprays (F) den Kolbenboden bei Atmosphärendruck bei einem Einspritzzeitpunkt schneidet, der einem Kurbelwinkel entspricht, der von 80 Grad vor dem oberen Totpunkt bis 30 Grad vor dem oberen Totpunkt während dem Schichtladungs-Verbrennungsbetrieb reicht.

5. Direkteinspritzbrennkraftmaschine mit Fremdzündung gemäß einem der vorausgehenden Ansprüche, **dadurch gekennzeichnet, dass** die Brennraumvertiefung (13), wie aus einer Draufsicht des Kolbenbodens ersichtlich, in einer im Wesentlichen rechteckigen Form ausgebildet ist und eine Breite (d) einer Öffnung der Brennraumvertiefung (13), gemessen in einer zur Strömungsrichtung der normalen Tumble-Strömung (A) senkrechten Richtung, so dimensioniert ist, dass ein Verhältnis (d/D) der Breite (d) zum Zylinderdurchmesser (D) in einem bestimmten Verhältnis liegt, das von 40% bis 80% reicht.

6. Direkteinspritzbrennkraftmaschine mit Fremdzündung gemäß einem der vorausgehenden Ansprüche, **dadurch gekennzeichnet, dass** eine Tumble-Strömung-Verstärkungseinrichtung (11) im Einlasskanal (7) vorgesehen ist, um die normale Tumble-Strömung (A) zu verstärken.

7. Direkteinspritzbrennkraftmaschine mit Fremdzündung gemäß Anspruch 6, **dadurch gekennzeichnet, dass** die Tumble-Strömung-Verstärkungseinrichtung (11) ein Teil-Absperrventil aufweist, das geeignet ist, einen im Wesentlichen unteren Hälftenbereich des Einlasskanals (7) abzusperren, der im Wesentlichen einer Hälfte oder mehr einer seitlichen Querschnittsfläche des Einlasskanals während dem Schichtladungs-Verbrennungsbetrieb und einer vollen Öffnung eines im Wesentlichen unteren Hälftenbereichs des Einlasskanals (7) während einem homogenen Ladungs-Verbrennungsbetrieb entspricht, bei dem eine frühe Kraftstoffeinspritzung beim Ansaugtakt ein homogenes Kraftstoff-Luft-Gemisch erzeugt.

8. Direkteinspritzbrennkraftmaschine mit Fremdzündung gemäß Anspruch 7, **dadurch gekennzeichnet, dass** eine Luftstrom-Führungseinrichtung (12) oberhalb und in der Nähe des Teil-Absperrventils vorgesehen ist, um eine Hauptströmung der zugeführten Luft zu einem im Wesentlichen halben Bereich einer Öffnung des Ansaugkanals (7) zu leiten, die einem im Wesentlichen mittigen Bereich des Brennraums (4) während dem Schichtladungs-Verbrennungsbetrieb zugewandt ist.

9. Direkteinspritzbrennkraftmaschine mit Fremdzündung gemäß Anspruch 8, **dadurch gekennzeichnet, dass** die Luftstrom-Führungseinrichtung (12) mindestens eine Trennwand (12a) aufweist, die sich von einer Umgebung der Tumble-Strömung-Verstärkungseinrichtung bis zu einer Umgebung des Einlassventils (5) erstreckt, um einen Innenraum des Ansaugkanals (7) in obere und untere Hälften zu unterteilen und einen Unter-Kanal (12b) aufweist, der in einem oberen Wandbereich des Ansaugkanals (7) in der Nähe des Einlassventils (5) ausgebildet ist, um Luft vom oberen Wandbereich des Ansaugkanals in den Brennraum zu injizieren und eine starke Tumble-Bewegung in den Brennraum in einer normalen Tumble-Strömungsrichtung zu erzeugen.

10. Direkteinspritzbrennkraftmaschine mit Fremdzündung gemäß einen der vorausgehenden Ansprüche, **dadurch gekennzeichnet, dass** ein Spray-Winkel (θ) des von der Einspritzdüse (10a) eingespritzten Kraftstoffsprays (F) auf einen Winkel festgelegt ist, der bei Atmosphärendruck von 40 Grad bis 80 Grad reicht, und ein Einstellwinkel der Einspritzdüse (10a) des Kraftstoff-Injektors (10) auf einen Abfallwinkel festgelegt ist, der von 20 Grad bis 40 Grad reicht.

11. Direkteinspritzbrennkraftmaschine mit Fremdzündung gemäß einem der vorausgehenden Ansprüche, **dadurch gekennzeichnet, dass** die Zündkerze (9) an einer Position festgelegt ist, bei der eine Mittellinie der Zündkerze von der Achse (P•O) des Kolbens (2) zur Auslassventilseite hin versetzt ist.

12. Direkteinspritzbrennkraftmaschine mit Fremdzündung gemäß Anspruch 5, **dadurch gekennzeichnet, dass** die Brennraumvertiefung (13) durch eine kreisbogenförmige Ausnehmung definiert ist, die aus den ersten bzw. zweiten gekrümmten Oberflächen mit dem ersten vorgegebenen Krümmungsradius (R₁) und dem zweiten vorgegebenen Krümmungsradius (R₂) und zwei gegenüberliegenden, zu einer Strömungslinie der normalen Tumble-Strömung (A), die entlang der Brennraumvertiefung strömt, parallelen Seitenwänden (13a, 13a) zusammengesetzt ist, um eine Fokussierungswirkung bei der normalen Tumble-Strömung (A) zu erzeugen und die Tumble-Strömung daran zu hindern, in der zur Strömungsrichtung der normalen Tumble-Strömung (A) senkrechten Richtung zu entweichen.

13. Direkteinspritzbrennkraftmaschine mit Fremdzündung gemäß Anspruch 1, **dadurch gekennzeichnet, dass** der Brennraum (4) ein Pultdach-Brennraum ist, die kreisbogenförmige Ausnehmung der Brennraumvertiefung (13) des Kolbens (2) durch die ersten und zweiten gekrümmten Oberflächen und zwei gegenüberliegenden, zu einer Strömungslinie der normalen Tumble-Strömung (A) parallelen Seitenwänden (13a, 13a) definiert ist, der tiefste Bereich der kreisbogenförmigen Ausnehmung der Brennraumvertiefung (13) an einem mittigen Bereich des Kolbenbodens festgelegt ist, die erste gekrümmte Oberfläche mit dem ersten vorgegebenen Krümmungsradius (R₁) vom tiefsten Bereich zur Auslassventilseite reicht, wohingegen die zweite gekrümmte Oberfläche mit dem zweiten vorgegebenen Krümmungsradius (R₂), der größer als der erste vorgegebene Krümmungsradius (R₁) ist, vom tiefsten Bereich zur Einlassventilseite reicht und eine Gratlinie (S•E1) durch eine Grenzlinie zwischen dem Kolbenboden der Auslassventilseite und der ersten gekrümmten Oberfläche definiert ist, die vom tiefsten Bereich zur Auslassventilseite reicht.
